# EUROPEAN PATENT SPECIFICATION

(11) **EP 2 232 088 B1**
(45) Date of publication and mention of the grant of the patent: **04.05.2016**
(21) Application number: 08790077.5
(22) Date of filing: 24.07.2008
(51) Int. Cl.: F16B 37/00, F16L 19/00, F16L 37/244

(54) **CONNECTION ELEMENT FOR FLUIDS DISTRIBUTION PIPES AND IMPLEMENTATION METHOD THEREOF**
VERBINDUNGSELEMENT FÜR FLUIDVERTEILROHRE UND IMPLEMENTIERUNGSVERFAHREN DAFÜR
ELÉMENT DE RACCORDEMENT POUR TUYAUX DE DISTRIBUTION DE FLUIDES ET PROCÉDÉ D'INSTALLATION DE CELUI-CI

(30) Priority: 28.12.2007 IT VI20070329
(43) Date of publication of application: 29.09.2010
(73) Proprietor: A.m.s. S.p.a., 36040 Grancona (VI) (IT)
(72) Inventor: ALEARDI, Romano, I-36040 Grancona (Vl) (IT)
(74) Representative: Iannone, Carlo Luigi
(86) International application number: PCT/IT2008/000498
(87) International publication number: WO 2009/084066

(56) References cited:
- DE-U1- 29 520 051
- DE-U1-202005 005 872
- GB-A- 191 517 075
- US-A- 2 460 110
- US-A- 3 729 217

## Description

The present invention relates, in general, to a connection element for distribution pipes of fluids, such as water, gas and the like, and a method of implementation of the aforesaid connection element.

More in particular, the invention refers to a terminal element of connection, such as a simple nut, a flange nut, a grommet nut with gaskets-carrier seat, a through nut, etc., useful for the connection of pipes which can be used for the distribution of fluids, such as water, gas and the like.

The invention also extends to a relative method of implementation of the aforesaid connection element. The terminal element of connection and/or fitting of the tubes, which connect the various equipments of a hydraulic plant, currently consist of nuts or inserts of clamping (rivets or pins), usually made of metal sheet of iron or steel and usually hot forged.

The main use of the tubes (defined as metallic cylindrical section bars, each consisting of a single sheet of metal such as iron or steel) or pipes (defined as a set of tubes) is clearly to convey fluids without dispersion.

Such pipes, suitable to convey the fluids, are defined hydraulic tubes and constitute the vast majority of the tubes produced; among these, almost the entirety presents a nearly circular section.

In general, moreover, the pipes for hydraulic applications follow some prefixed dimensional standards; the standard most commonly used is the ANSI B36 which fixes some concepts of universal use in relation to the classification of the pipes according to a nominal diameter, to the consequent extent of the external diameter, as well as to a series of normalized thicknesses, dependent on the pipe diameter.

The hydraulic pipes can be united one each other by flanges or welding, as well as by threaded nuts, through or blind, suitable to clamp a screw or threaded male. Such a connection is known from e.g. GB 191517075 A.

The nuts are usually hexagonal to allow a key to keep the tight during the clamping or opening operations, although there are other forms of nuts, since it is possible to find them square, knurled, with wings or for special keys (of security), while the thread can be left-hand or right-hand and carried out with different pitches depending on the use.

In addition, the nuts used can be of the simple, with flange, with slot, grommet (or blind, suitable to define a gasket-carrier seat), T, welding, self-locking, with cage, with polymer inserts and/or with rivets or pins hot forges type.

In any case, those connection elements still present relevant production costs and do not allow to obtain the optimal structural characteristics such as the mechanical rigidity of the fittings and/or the seal itself of the same pipe.

As part of the requirements mentioned above, the main aim of the present invention is to overcome the drawbacks cited above and, in particular, to make a connection element for fluids distribution pipes, which has a higher mechanical rigidity and allows to achieve greater seal inside the pipe, once fixed to the pipe, than the fittings of the traditional type.

Another aim of the present invention is to provide a connection element for fluids distribution pipes which allows an easy assembly of the pipes and, in particular, to simplify and facilitate the clamping or opening operations of the fittings with respect to the known technique.

Another aim of the invention is to make a connection element for fluids distribution pipes which can be produced at low cost, as a consequence allowing to drastically knock down the total costs for the users. Further aim of the present invention is to indicate a method for implementing a connection element for fluids distribution pipes which allows to significantly knock down the production costs of the product, compared with implementation processes of the known type.

These and other aims are achieved through the carry out of a connection element for fluids distribution pipes in accordance with the attached claim 1 and through a respective method of implementation according to the claim 9.

Other features of detail of the invention are set forth in the dependent claims.

In advantageous way, the connection element according to the invention is made by forging and directly from a metal sheet strip; this method of production helps to considerably reduce the cost of the product, getting, at the same time, compared with the traditional products, a greater structural rigidity of the piece, a better tight of the screw thread, a better attitude to the insertion of the threaded male at the entry and an easier engage of the key during the clamping or opening operations.

Further features and advantages of the connection element for fluids distribution pipes, according to the present invention, will be better pointed out from the following description, referring to a preferred embodiment and provided by illustrative and indicative, but not limiting, way of example and from the attached drawings in which:
- figure 1 is a plan first view of a connection element for fluids distribution pipes and, in particular, is a top plan first view of a blind gaskets-carrier nut or nut with shoulder, made according to the present invention;
- figure 2 is a further plan view, specular to the previous view, of the connection element shown in figure 1, according to the present invention;
- figure 3 is a side, partly sectional, view of the connection element for fluids distribution pipes referred to figures 1 and 2, according to the present invention;
- figures 4 and 5 show two enlarged and not in scale details of the side view of the connection element shown in figure 3, according to the present invention;
- figures 6, 7 and 8 show as many manners of use of the connection element for fluids distribution pipes, according to the invention.

First of all it is reminded that, although the following description and attached figures refer to a particular connection and/or fitting element of pipes, i.e. a grommet nut or blind gaskets-carrier nut, the present invention can be likewise extend to any other type of connection and/or fitting element for fluids distribution pipes in general, such as simple nuts, flange nuts, self-locking nuts, cage nuts, T-nuts, slot nuts, welding nuts, through nuts, inserts, etc.

With reference to the figures mentioned, the connection element according to the invention is entirely made from a sheet strip, by means of a forging process, carried out preferably at cold, in order to contain production costs.

Furthermore, the product so obtained, in a preferred and illustrative, but not limiting, embodiment (as that one shown), a typical grommet form, including a terminal rounded portion 10, which defines a rear opening 11 and ends in a series of flat walls or faces 12, separated from respective projections 13 and suitable to constitute the support parts for the action of a key or other similar instrument necessary for the clamping or the opening of the aforesaid connection element.

In particular, these flat walls 12 define a polygonal solid having several sides, which, in preferred but not limiting embodiments, is octagonal; the choice of an octagonal profile is determined by the fact that it is necessary to reach a compromise between a large number of faces 12, in order to achieve a good seal of the fitting element, and an enough wide area of each face 12, so that it is possible to exert an adequate support and an adequate strength by means of the clamping key.

Always according to the invention, from the opposite side of the rounded portion 10, a collar 14 is made, which protrudes from the faces 12 and has a diameter greater than the diameter of the opening 11 (preferably consisting of a circular hole) and almost coincident with the diameter restricted to the aforesaid projections 13; the presence of the collar 14 provides a rigidity of the piece greater that the prior art, and also has an nonskid function of the clamping key.

In addition, the inner edge 15 of the collar 14 is adjacent to the crowned inner portions 16, corresponding to the outer faces 12, which identify a through inlet. 21 of the thread 19; the crowned portions 16 are also bounded by inner grooves 17 on which said thread 19 is realized.

In detail, the thread 19 is discontinuous along the inner surface of the connection element, being made only at the inner portions 16 and not also in correspondence and/or near the grooves 17.

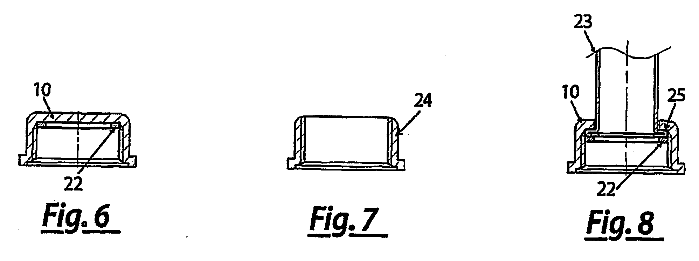

Then, in the event the connection element according to the invention consists of a grommet nut or a blind gaskets-carrier nut (shown in detail in figure 6), the inner portions 16 ends at a lower edge or shoulder, which represents the seat for the housing of one or more gaskets 22.

In the case, instead, of through nut 24 (use pattern described in detail in figure 7), such a shoulder is not provided, while in the case the connection element, according to the present invention, is used for the fitting of flanged pipes 23 (use pattern shown in detail in figure 8), the connection flange 25 of the pipe 23 rests at the lower edge (or shoulder) 18 of the inner portions 16 of the connection element and the gasket 22 is close to the pipe 23.

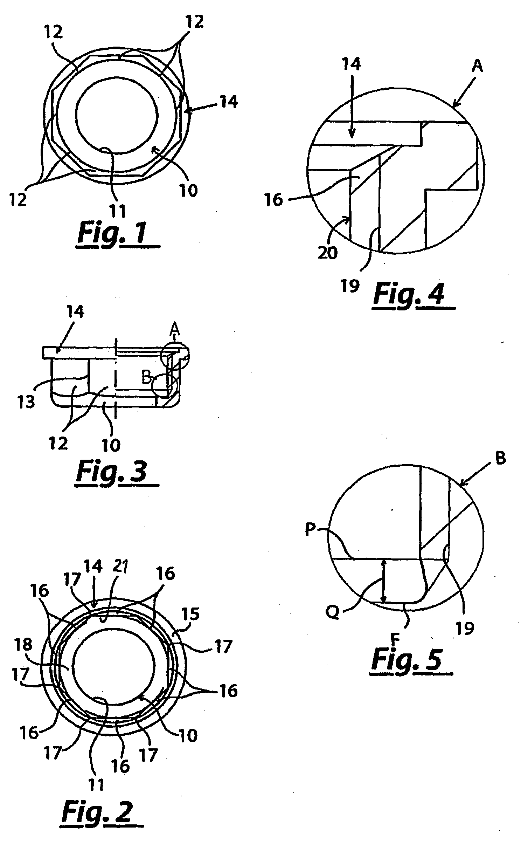

The thread 19 (visible in the details A and B of the respective attached figures 4 and 5) is made inside the piece through a rolling operation (preferable operation because it is more economical than the known techniques) and/or through a removal operation, using a tool, and, in case a rolling operation is carried out, a rolling male is generally used.

A further advantage determined by the method of implementation by forging on a sheet of the connection element, according to the present invention, consists of the fact that, in the forging phase, a material upsetting is created inside the connection element and, specifically, at the areas 20 of the inner portions 16 adjacent or facing the collar 14 (as shown in more detail in figure 4).

Such a material upsetting is obtained during the production of the piece thanks to the particular shape of the die and determines a tight of screw thread better than the traditional products, as well as a greater resistance of the same.

The presence of material inside the connection element, neat to the edge 15 of the collar 14, also favours the conical entry of the male, which engages on the thread 19; fact, since properly the material upsetting leads to a thinning of the thread 19 towards the shoulder 18, from the opposite side of the collar 14, at the areas 20 of the inner portions 16, a greater coupling of the male on the thread 19 and a greater lowering of the terminal tip end of the male inside the connection element are obtained.

In particular, a height Q equal to the distance between the level F to the upper surface of the shoulder 18 and limit level P of the complete screw thread reached by the terminal tip of the male at the end of the coupling inside the connection element (as shown in the detail B of figure 5) is obtained, which is generally equal to or less than 2,5 times the pitch of the screw thread and in particular equal to 0,5 times the pitch of the screw thread.

From the description made it is understood, therefore, as the connection element for fluids distribution pipes, as well as the relative method of implementation, which are the object of the present invention, fully reach the aims and achieve the advantages mentioned above.

It is, finally, clear that several other variations may be made to the connection element and to the relative method of implementation, without for this reason going out of the novelty principles inherent to the inventive idea, as it is clear that, in the practical implementation of the invention, materials, shapes and sizes of the details could be any, depending on the needs, and could be replaced with others technically equivalent, these variations being limited only by the appended claims.

## Claims

1. Connection element for fluids distribution pipes comprising:
- an outer surface which defines at least one through opening (11, 21) and which includes a plurality of outer flat walls or faces (12), bounded by respective outer longitudinal projections (13) and suitable to constitute the support parts for the action of a key or other similar instrument necessary for the clamping or the opening of said connection element,
- and a plurality of crowned inner portions (16) corresponding to said outer flat walls or faces (12), wherein said crowned inner portions (16) are bounded by respective inner grooves (17) and wherein a thread (19), suitable for coupling the connection element with at least one male element, is made at least partly on said crowned inner portions (16), said thread (19) being discontinuous on the surface of said crowned inner portions (16), **characterised in that** at least one collar (14) is made in correspondence of said at least one through opening (11, 21) of said outer surface, the collar (14) protruding laterally and outside said through opening (11, 21) with respect to said outer flat walls or faces (12) of the outer surface.

2. Connection element as claimed in claim 1, **characterised in that** said collar (14) has a circular shape with a diameter greater than the diameter of said at least one through opening (11) and almost coincident with the diameter restricted to said outer longitudinal projections (13).

3. Connection element as claimed in claim 1, **characterised in that** said collar (14) has an edge (15) which is adjacent to said crowned inner portions (16) of the connection element.

4. Connection element as claimed in claim 1, **characterised in that** said outer flat walls or faces (12) end at a terminal rounded portion (10), which defines said at least one through opening (11).

5. Connection element as claimed in claim 1, **characterised in that** said outer flat walls or faces (12) define a polygonal solid and particularly define an octagonal profile.

6. Connection element as claimed in claim 1, **characterised in that** said crowned inner portions (16) end at a lower edge or shoulder (18), said shoulder (18) constituting a seat for housing one or more gaskets (22).

7. Connection element as claimed in claim 6, **characterised in that** a level surface of said shoulder (18) has a distance from a limit level (P) of a complete thread (19) achieved by said male element inside the connection element which is generally equal to or less than 2.5 times the pitch of the screw thread and preferably equal to 0.5 times the pitch of the screw thread.

8. Method for the implementation of a connection element for fluids distribution pipes as claimed in claim 1, **characterised in that** it provides a forging phase, carried out preferably at cold, starting from a steel strip.

9. Method as claimed in claim 8, **characterised in that** said thread (19) is made inside the connection element through a rolling operation, through a rolling male and/or through a removal operation.

10. Method as claimed in claim 8, **characterised in that** during said forging phase a material upsetting is obtained inside the connection element and particularly at areas (20) of said crowned inner portions (16) of the connection element which are adjacent and/or which face said collar (14).

11. Method as claimed in claim 10, **characterised in that** said material upsetting is obtained during the production of the connection element by using a die shaping close to the edge (15) of said collar (14), in order to favour a conical entry of a male element which engages on said thread (19), said material upsetting leading to a thinning of said thread (19) from the opposite side with respect to said collar (14), in order to obtain a greater coupling of the male element on said thread (19) and a greater lowering of the terminal tip of the male element inside said connection element.

## Patentansprüche

1. Verbindungselement für Fluidverteilungsrohre, umfassen:
- eine Außenfläche, die mindestens eine Durchgangsöffnung (11, 21) definiert und die eine Vielzahl von äußeren flachen Wänden oder Flanken (12) enthält, die durch jeweilige äußere longitudinale Vorsprünge (13) begrenzt und geeignet sind, um die Halteteile für den Eingriff eines Schlüssels oder eines ähnlichen Instruments zu bilden, das zum Spannen oder Lösen des Verbindungselements notwendig ist,
- und eine Vielzahl von balligen Innenabschnitten (16) korrespondierend zu den äußeren flachen Wänden oder Flanken (12), wobei die balligen Innenabschnitte (16) durch jeweilige Innennuten (17) begrenzt sind und wobei ein Gewinde (19) in mindestens einen Teil der balligen Innenabschnitte (16) eingebracht ist, geeignet um das Verbindungselement mit mindestens einem Steckerelement zu verbinden, wobei das Gewinde (19) auf der Oberfläche der balligen Innenabschnitte (16) diskontinuierlich ist, **dadurch gekennzeichnet, dass** mindestens ein Kragen (14) hergestellt ist entsprechend der mindestens einen Durchgangsöffnung (11, 21) der Außenfläche, wobei der Kragen (14) seitlich und außerhalb der Durchgangsöffnung (11, 21) in Bezug auf die äußeren flachen Wände oder Flanken (12) der Außenfläche hervorsteht.

2. Verbindungselement, wie in Anspruch 1 beansprucht, **dadurch gekennzeichnet, dass** der Kragen (14) eine Kreisform hat mit einem Durchmesser größer als der Durchmesser der mindestens einen Durchgangsöffnung (11) und fast zusammenfallend mit dem Durchmesser, der begrenzt wird durch die äußeren longitudinalen Vorsprünge (13).

3. Verbindungselement, wie in Anspruch 1 beansprucht, **dadurch gekennzeichnet, dass** der Kragen (14) eine Kante (15) hat, die an die balligen Innenabschnitte (16) des Verbindungselements angrenzt.

4. Verbindungselement, wie in Anspruch 1 beansprucht, **dadurch gekennzeichnet, dass** die äußeren flachen Wände oder Flanken (12) an einem abschließenden runden Abschnitt (10) enden, der die mindestens eine Durchgangsöffnung (11) definiert.

5. Verbindungselement, wie in Anspruch 1 beansprucht, **dadurch gekennzeichnet, dass** die äußeren flachen Wände oder Flanken (12) einen Polygonfestkörper definieren und insbesondere ein Achteckprofil definieren.

6. Verbindungselement, wie in Anspruch 1 beansprucht, **dadurch gekennzeichnet, dass** die balligen Innenabschnitte (16) an einer unteren Kante oder Schulter (18) enden, wobei die Schulter (18) einen Sitz zur Aufnahme einer oder mehrerer Dichtungen (22) bildet.

7. Verbindungselement, wie in Anspruch 6 beansprucht, **dadurch gekennzeichnet, dass** ein ebener Untergrund der Schulter (18) einen Abstand von einer Begrenzungsebene (P) eines kompletten Gewindes (19) hat, das von dem Steckerelement im Inneren des Verbindungselement erreicht wird, der im Allgemeinen gleich oder weniger als 2,5 mal die Gewindesteigung und vorzugsweise gleich 0,5 mal die Gewindesteigung ist.

8. Verfahren zur Implementierung eines Verbindungselements für Fluidverteilungsrohre, wie in Anspruch 1 beansprucht, **dadurch gekennzeichnet, dass** es eine Schmiedephase vorsieht, die vorzugsweise bei Kälte ausgeführt wird ausgehend von einem Stahlstreifen.

9. Verfahren, wie in Anspruch 8 beansprucht, **dadurch gekennzeichnet, dass** das Gewinde (19) innerhalb des Verbindungselements hergestellt wird durch einen Rollvorgang, durch Rollen eines Außengewindes und/oder durch einen Entfernungsvorgang.

10. Verfahren, wie in Anspruch 8 beansprucht, **dadurch gekennzeichnet, dass** während der Schmiedephase ein Stauchungsmaterial im Inneren des Verbindungselements und insbesondere an Bereichen (20) der balligen Innenabschnitte (16) des Verbindungselements erhältlich ist, die dem Kragen (14) benachbart und/oder zugewandt sind.

11. Verfahren, wie in Anspruch 10 beansprucht, **dadurch gekennzeichnet, dass** das Stauchungsmaterial erhältlich ist während der Herstellung des Verbindungselements durch Verwendung einer Form, die nahe der Kante (15) des Kragens (14) formt, um einen konischen Eintritt eines Steckerelements zu begünstigen, das in das Gewinde (19) eingreift, wobei das Stauchungsmaterial zu einer Ausdünnung des Gewindes (19) von der entgegengesetzten Seite in Bezug auf den Kragen (14) führt, um eine größere Verbindung des Steckerelements auf dem Gewinde (19) und eine größere Verringerung der Abschlussspitze des Steckerelements im Inneren des Verbindungselements zu erreichen.

## Revendications

1. Elément de raccordement pour tuyaux de distribution de fluides, comprenant :
- une surface extérieure qui définit au moins une ouverture traversante (11, 21) et comprend une pluralité de parois ou faces planes extérieures (12) délimitées par des saillies longitudinales extérieures (13) respectives et aptes à constituer les parties support pour l'action d'une clé ou autre instrument similaire nécessaire au serrage ou à l'ouverture dudit élément de raccordement,
- et une pluralité de parties intérieures bombées (16) correspondant auxdites parois ou faces planes extérieures (12), lesdites parties intérieures bombées (16) étant délimitées par des rainures intérieures (17) respectives, et un filetage (19), apte à coupler l'élément de raccordement à au moins un élément mâle, étant réalisé au moins partiellement sur lesdites parties intérieures bombées (16), ledit filetage (19) étant discontinu sur la surface desdites parties intérieures bombées (16),
**caractérisé en ce qu'**au moins un collier (14) est disposé en correspondance avec ladite au moins une ouverture traversante (11, 21) de ladite surface extérieure, le collier (14) faisant saillie latéralement et à l'extérieur de ladite ouverture traversante (11, 21) par rapport auxdites parois ou faces planes extérieures (12) de la surface extérieure.

2. Elément de raccordement selon la revendication 1, **caractérisé en ce que** ledit collier (14) a une forme circulaire d'un diamètre supérieur au diamètre de ladite au moins une ouverture traversante (11) et coïncidant presque avec le diamètre limité auxdites saillies longitudinales extérieures (13).

3. Elément de raccordement selon la revendication 1, **caractérisé en ce que** ledit collier (14) présente un bord (15) adjacent auxdites parties intérieures bombées (16) de l'élément de raccordement.

4. Elément de raccordement selon la revendication 1, **caractérisé en ce que** lesdites parois ou faces planes extérieures (12) se terminent au niveau d'une partie terminale arrondie (10) qui définit ladite au moins une ouverture traversante (11).

5. Elément de raccordement selon la revendication 1, **caractérisé en ce que** lesdites parois ou faces planes extérieures (12) définissent un profil polygonal plein et définissent, en particulier, un profil octogonal.

6. Elément de raccordement selon la revendication 1, **caractérisé en ce que** lesdites parties intérieures bombées (16) se terminent au niveau d'un bord ou épaulement inférieur (18), ledit épaulement (18) formant un logement destiné à recevoir un ou plusieurs joints d'étanchéité (22).

7. Elément de raccordement selon la revendication 6, **caractérisé en ce qu'**une surface plane dudit épaulement (18) présente une distance, par rapport à un niveau limite (P) d'un filetage complet (19) réalisé par ledit élément mâle à l'intérieur de l'élément de raccordement, qui est généralement égale ou inférieure à 2,5 fois le pas du filetage de vis et de préférence égal à 0,5 fois le pas du filetage de vis.

8. Procédé destiné à la mise en oeuvre d'un élément de raccordement pour des tuyaux de distribution de fluides selon la revendication 1, **caractérisé en ce qu'**il comporte une phase de forgeage, exécutée de préférence à froid, à partir d'une bande d'acier.

9. Procédé selon la revendication 8, **caractérisé en ce que** ledit filetage (19) est réalisé à l'intérieur de l'élément de raccordement par une opération de laminage, par l'intermédiaire d'un élément mâle de laminage et/ou d'une opération d'enlèvement.

10. Procédé selon la revendication 8, **caractérisé en ce qu'**est opéré, pendant ladite phase de forgeage, un refoulement de matière à l'intérieur de l'élément de raccordement et notamment au niveau des régions (20) desdites parties intérieures bombées (16) de l'élément de raccordement qui sont adjacentes et/ou situées en regard dudit collier (14).

11. Procédé selon la revendication 10, **caractérisé en ce que** ledit refoulement de matière est réalisé pendant la production de l'élément de raccordement par un matriçage à proximité du bord (15) dudit collier (14), afin de favoriser une entrée conique d'un élément mâle qui s'engage sur ledit filetage (19), ledit refoulement de matière opérant un amincissement dudit filetage (19) à partir du côté opposé audit collier (14) afin d'obtenir un meilleur accouplement de l'élément mâle sur ledit filetage (19) et un meilleur abaissement de l'extrémité terminale de l'élément mâle à l'intérieur dudit élément de raccordement.
